# EUROPEAN PATENT SPECIFICATION

(11) **EP 2 724 876 B1**
(45) Date of publication and mention of the grant of the patent: **27.11.2019**
(21) Application number: 12189970.2
(22) Date of filing: 25.10.2012
(51) Int. Cl.: B60D 1/54, B60D 1/24

(54) **Towing hook arrangement and method for detecting a load applied to a towing hook**
Zughakenanordnung und Verfahren zur Detektion einer Last am Zughaken
Agencement de crochet de remorquage et procédé pour détecter une charge appliquée à un crochet de remorquage

(43) Date of publication of application: 30.04.2014
(73) Proprietor: Brink Towing Systems B.V., 7951 CX Staphorst (NL)
(72) Inventor: Janssens, Gijs, 9411TV Beilen (NL); Terlien, Marc, 3825JK Amersfoort (NL)
(74) Representative: Valea AB

(56) References cited:
- EP-A1- 1 634 729
- EP-A1- 2 233 326
- EP-A2- 1 084 872
- EP-A2- 1 142 732
- DE-A1- 19 612 959

## Description

### TECHNICAL FIELD

The present invention relates to towing hooks for vehicles, for towing or mounting objects such as trailers, caravans, bike carriers, luggage carriers, and a method for detecting the applied load to the towing hook.

### BACKGROUND OF THE INVENTION

Towing hooks are commonly used to tow, or mount, trailers, caravans, bike carriers, luggage carriers or vehicles. There are generally two types of towing hooks; fixed towing hooks and towing hooks which can be positioned between a towing position, also referred to as an operative position, and a storage position, also referred to as an idle position. For example EP 1,894,752 B1 discloses a displaceable towing hook. The towing hook projects from a housing which forms a socket coupling with a first end of the towing hook. The first end of the towing hook has the form of a ball, forming a ball and socket coupling together with the housing. The ball and socket coupling between the towing hook and the housing permits the towing hook to be positioned in an operative position for towing an object, and in an idle position.

The amount of load on the ball of the towing hook can vary dependent on how the load is arranged on the towable object. If the towable object is a trailer carrying gravel, the position of the gravel on the trailer can severely affect the load applied on the ball of the towing hook. If the load is small, or even negative, the trailer can adopt a "fish tail" behavior, i.e. the trailer can begin to wobble from side to side. It can be difficult to know when the load limit is reached or exceeded. It is further difficult to know when a trailer is loaded in an appropriate manner and if the ball of the towing hook is imparted with an appropriate load. Having a load measuring device to measure the load applied to the towing hook, also referred to as a nose load measurement, is thus a safety issue.

In the US patent application No. US 2006/0290102, W. Vanbuskirk, a trailer ball, also referred to as towing ball, is disclosed comprising an integrated sensor mechanism for detecting a force imparted on the trailer ball. A ball portion of a towing hook is however very exposed to dirt and weather, which makes the integration of a sensor mechanism to the trailer ball itself difficult and expensive.

Another attempt to integrate a sensor mechanism to a towing hook is disclosed in the European patent application No. EP 2,363,307, Westfalia Automotive GmbH. A coupling body is movably mounted to a coupling body carrier. A sensor, arranged between the coupling body and the coupling body carrier, is adapted to detect the relative motion between the coupling body and the coupling body carrier as a function of applied pressure. The arrangement is using moving parts susceptible to wear and which require substantial and expensive modifications to existing systems.

An example of a towing hook arrangement showing a motor driven pivotable tow hook which comprises an electronic control unit detecting the amount of power provided to the motor in order to switch off the motor at increased power levels is shown in EP 2 233 326 A1.

### SUMMARY OF THE INVENTION

It would seem that there is a need for an arrangement and a method for measuring the applied load to a towing hook, i.e. the nose load, which does not require substantial modifications of existing systems, which is cheap and easy to implement. It is an objective with the present invention to provide a solution to at least one of the above mentioned drawbacks, or to at least partly solve one of the above mentioned drawbacks or to provide a useful alternative.

The objectives are at least partly met by a towing hook arrangement according to claim 1.

The term "load" in this case is intended to include the detection of a negative load on the towing hook e.g. a lifting force imparted on the towing hook, and also the absence of a load. By the word "external" is meant any load imparted to the towing hook except the dead weight of the towing hook itself. The external load can be quantitative load, e.g. the amount of load, or a qualitative load, e.g. load or no load.

The towing hook arrangement enables the use of at least one electrical motor to impart a load to the towing hook enabling a load measuring function. As the supplied power to the electrical motor can be controlled, monitored, recorded or tracked in any other way, the amount of load applied to the towing hook, i.e. the nose load, can be measured. According to the invention, an electrical control unit and/or software, is adapted for determining the amount of load applied to the towing hook by supervising the amount of power supplied to the electrical motor.

To prevent the towing hook form accidental or unwanted displacement, especially when the towing hook can be displaced between an operative position and an idle position, the towing hook arrangement can comprise a lock arrangement for preventing the towing hook from being displaced. Such lock arrangement can comprise at least one displaceable lock member, preferably two displaceable lock members. The electrical motor can be adapted to displace the at least one displaceable lock member. In this way, the same electrical motor can be used to impart a load to the towing hook, as used to operate the lock arrangement. It is possible that the lock arrangement is configured to transfer a torque to the towing hook; the electrical motor is in this way indirectly transferring a torque to the towing hook.

According to an aspect, the electrical motor can be adapted to operate the at least one displaceable lock member via a rotatable shaft. The displaceable lock member can be threadably engaged with the rotatable shaft for example.

According to an aspect, the electrical motor can be configured to displace the towing hook between an operative position and an idle position and/or for operating a lock arrangement. It is possible to have at least two electrical motors, one for displacing the towing hook between the operative and the idle position, and one for operating the lock arrangement. Any one, or both, of the electrical motors can be used to impart a load, such as a torque, to the towing hook enabling measurement of the external load applied to the towing hook.

The towing hook arrangement can be adapted to measure the amount of power supplied to the electrical motor, and thus the amount of external load imparted to the towing hook, to enable a quantitative detection of the external load applied to the towing hook. It can further be used to determine if an external load or no external load is applied to the towing hook. Such determination can be very favourable as it can be used to determine whether a trailer is mounted to the towing hook or not for example. In practise, when having a fully or semi-automated towing hook arrangement, this function can be used to prevent the towing hook from being displaced to an idle position if the towing hook is still mounted to a trailer for example.

The present invention also relates to a method for measuring a load applied to a towing hook. The towing hook is interacting with an electrical motor, preferably to impart a load to the towing hook. The method comprises the steps of measuring the amount of power supplied to the electrical motor, and to use the measured amount of supplied power to determine the applied external load to the towing hook.

The method does not require substantial modifications of existing systems, it is easy to measure the supplied power to an electrical motor already used to e.g. displace a lock arrangement. This makes the method cheap and easy to implement.

An electronic control unit can be used to control the amount of power supplied to the electrical motor. Using an ECU will improve the detection of the supplied power, and also the possibility to process and use the data from such measurement for any third application.

The method can further comprise the step of displacing the towing hook a first distance, and measuring the amount of supplied power during, or in connection, with the displacement.

The method can optionally comprise the step of; providing at least a first and a second amount of power to the electrical motor, the first amount of power being different from the second amount of power.

By enabling to vary the power supplied to the electrical motor, different amounts of torque can be transferred to the towing hook which enables the applied external load to the towing hook to be measured.

An optional step can be to determine the external load applied to the towing hook by detecting the characteristics of the applied amount of power, the applied amount of power can be tracked, recorded, monitored, or visualized in any suitable way for example. A processing unit, such as a computer, can be used to interpret and/or process the output data from such tracking.

In contrast to detecting the amount of power supplied when the towing hook is displaced, the towing hook can be subjected to a torque sufficiently high for not permitting displacement of the towing hook, as the amount of power is reduced, the towing hook will reach a level at which the supplied power, and thus the transferred torque, is not high enough for the towing hook to sustain its position. The moment the towing hook is displaced, the supplied power is comparable with the applied load to the towing hook.

According to an aspect, the electrical motor can be is configured to operate a lock arrangement for locking the towing hook in a predetermined position, and/or the electrical motor can be configured to operate displacement the towing hook between a first and a second position, such as an operative position for towing an object, and an idle position.

The method can also comprise the step of; unlocking the towing hook from a locked state, or locked position, in which the towing hook is prevented from being displaced, to a partly unlocked state, or to an unlocked state, in which the towing hook is permitted to be displaced. A partly unlocked state is a state in which the towing hook is prevented from being displaced, e.g. to from an operative position to an idle position, but with the lock arrangement not fully engaged. It is also possible that the measurement is performed without displacing the towing hook at all.

The electronic control unit can initially apply a high amount of power and thereafter subsequently reducing the amount of power (high-low) or the electronic control unit can initially applying a low amount of power and thereafter subsequently increase the amount of power (low-high). The high-low, or low-high application of power can be combined to measure the applied load to the towing hook more accurately; forming cycles of applied power, e.g. high-low, low-high, or low-high, low-high. Another suitable cycle can be; high-low, high-low for example.

Optionally the method for measuring a load applied to a towing hook is performed with a towing hook arrangement according one or more embodiments as disclosed herein, or according to any one of the appended claims.

### BRIEF DESCRIPTION OF THE DRAWINGS

Non-limiting embodiments will be described in greater detail with reference to the accompanying figures in which;
figure 1a shows a towing hook arrangement with a view towards the rear of the towing hook arrangement;
figure 1b shows the towing hook arrangement of figure 1 with a view towards the side of the towing hook arrangement;
figures 2a-2c show the towing hook arrangement of figure 1 with a view towards the ball and socket connection between a housing of the towing hook arrangement and the towing hook of the towing hook arrangement of figure 1, illustrating the function of the displaceable lock members of the lock arrangement;
figure 3 show the towing hook arrangement of figure 1a in a locked state (to the left) and in a partly unlocked state (to the right);
figures 4a-4d show graphs of the applied power to the electrical motor transferring torque to the towing hook, measured in ampere and;
figure 5 shows a schematic flow chart of a method for measuring the load applied to the towing hook of a towing hook arrangement.

### DETAILED DESCRIPTION OF PREFERRED EMBODIMENTS

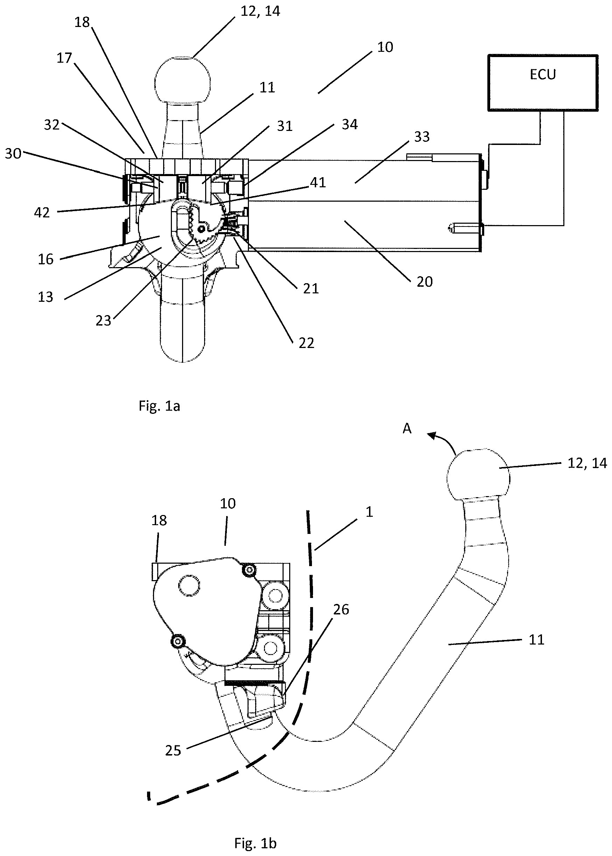

Figure 1 shows an electrically operable towing hook arrangement 10, hereafter referred to only as the towing hook arrangement 10. A towing hook arrangement 10 can be arranged at the rear of a vehicle, such as an automobile, enabling the vehicle to tow or mount an object such as a trailer, caravan, bike carrier, vehicle, or the like. The towing hook arrangement 10 comprises a towing hook 11 having a first and a second end 12, 13. The first end 12 of the towing hook has a towing ball 14 to which the object can be connected via a ball and socket connection. The second end 13 of the towing hook 11 comprises a ball 16 forming a ball and socket connection 17 together with a housing 18 of the towing hook arrangement 10.

The towing hook 11, and the towing ball 14, can be displaced between a first and a second position. In the shown embodiment, the towing hook 11 is pivoted about a pivot point in the center of the ball 16 of the second end 13 of the towing hook 11. The first and the second position can be an operative position, as shown in figure 1a, and an idle position (not shown). In the operative position, the towing hook arrangement 10 is ready to be connected to an object, and able to tow the object after the vehicle (not shown). In the idle position, the towing hook 11 is generally in a concealed position, or in a storage position, e.g. behind a bumper of the vehicle.

To displace the towing hook 11 between the operative position and the idle position, the towing hook 11 is connected to a first electrical motor 20 via a driving shaft 21. At the end of the driving shaft 21 is a gear wheel 22 which cooperates with a cam surface 23 arranged on the ball 16 of the second end 13 of the towing hook 11. The torque from the first electrical motor 20 is transferred as the driving shaft 21 rotates via meshed gears to displace the towing hook 11 between the operative and idle position. Such coupling is further described in the European Patent No. EP 1,894,752 B1, Brink Internat BV. Figure 1b shows the embodiment of figure 1a with a view towards the side of the towing hook arrangement 10; visible in figure 1b are the towing hook 11, the towing ball 14 and the housing 18. A part of the rear of a vehicle 1 is further schematically shown in figure 1b.

Further seen in figure 1a; the towing hook arrangement 10 also comprises a lock arrangement 30 comprising a first and a second displaceable lock member 31, 32. A second electrical motor 33 operates a driving shaft 34 which is connected to the first and the second displaceable lock members 31, 32 via threads. The pitch angle of the threaded connection of the first displaceable lock member 31 and the driving shaft 34 of the second electrical motor 33 is arranged in an opposite direction as compared to the threaded connection of the second displaceable lock member 32 and the driving shaft 34 of the second electrical motor 33. If for example the pitch angle of the thread of the first displaceable lock member 31 is +10 degrees, the pitch angle of the thread of the second displaceable lock member 32 can be -10 degrees. Thus upon rotation of the driving shaft 34 of the second electrical motor 33, the first and the second displaceable lock members 31, 32 will be displaced away from each other or towards each other, dependent of the direction of rotation of the driving shaft 34 of the second electrical motor 33. It is of course possible to have only one displaceable lock member which can be displaced in the same, or similar, manner as described above.

An electronic control unit ECU is connected to the first and the second electrical motors 20, 33 to supervise the amount of power, or current, supplied to the first and the second electrical motors 20, 33. By supervising is hereby meant that it can perform at least one of the following measures; control, measure, monitor, detect, track or record, or the like, or mixtures thereof. It can thus either be used to explicitly control the amount of power, and/or simply to detect the amount of power supplied.

The towing hook 11 is, when positioned in the operative position, locked in position by the lock arrangement 30, and the first and the second displaceable lock members 31, 32, as mentioned above. A wedge formed section 25 on the towing hook 11 assists in retaining the towing hook 11 in position with a corresponding wedge section 26 on the housing 18. The first and the second displaceable lock members 31, 32 thus wedges the towing hook 11 into the wedge section 26 of the housing 18 by imparting a torque to the towing hook 11 as indicated by the arrow A in figure 1b. The wedge section 26 of the housing 18 provides for a permanent stop to the towing hook 11 and prevents it from any further rotation in that direction.

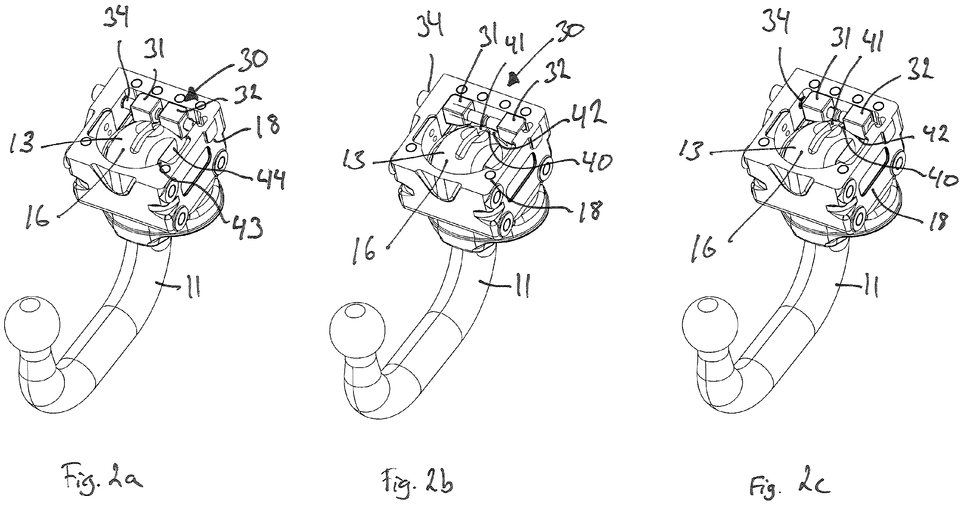

Figures 2a-2c show the lock arrangement 30 and the first and the second lock members 31, 32 in greater detail with parts of the housing 18 of the towing hook arrangement 10 removed for the sake of clarity. Figure 2a shows the first and the second displaceable lock members 31, 32 in the locked position; the towing hook 11 is in a locked state. Figure 2b shows the first and the second displaceable lock members 31, 32 in an unlocked position; the towing hook 11 thus being in an unlocked state and permitted to be displaced. Figure 2c shows an intermediate position referred to as a partly unlocked state, in which the first and the second displaceable lock members 31, 32 is positioned between the above mentioned positions shown in figure 2a and figure 2b.

With reference to figures 2a-2c, the ball 16 of the second end 13 of the towing hook 11 comprises a slot 40 having a first and a second angled surface 41, 42 which cooperates with the first and the second displaceable lock members 31, 32 respectively. The first and the second angled surfaces 41, 42 are arranged with an angle of about 170 degrees with respect to each other, forming an apex between the first and the second angled surfaces 41, 42, as can be seen in figure 1a for example. As the first and the second displaceable lock members 31, 32 are displaced towards each other, i.e. from the position shown in figure 2b to the position shown in figure 2a via the position shown in figure 2c, the first and the second displaceable lock members 31, 32 wedge the towing hook 11 into a lock position, or as mentioned above, the operative position, in which the towing hook 11 can be connected to an object. Due to the first and a second opposing angled surfaces 41, 42, when the lock arrangement 30 is unlocked, i.e. the first and the second displaceable lock members 31, 32 are displaced away from each other, i.e. going from figure 2a to figure 2c, the towing hook 11 is slightly offset from the operative position.

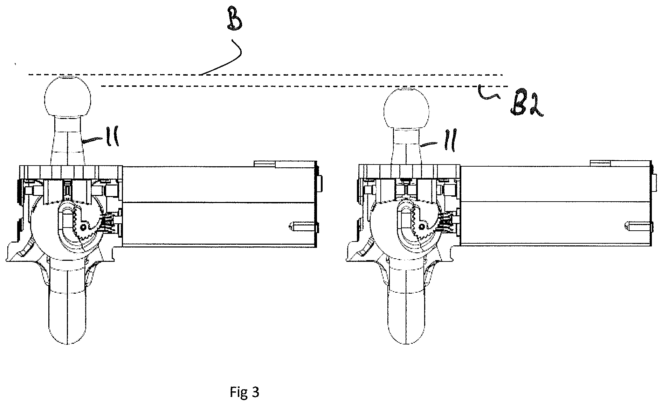

The offset is illustrated in figure 3 with a first dashed line B, showing the operative position (to the left), and a second dashed line B2, illustrating the offset. The towing hook 11 (to the right) is in figure 3 in a partly unlocked state as shown in figure 2c, i.e. the first and the second displaceable lock members 31, 32 are not fully retracted to an unlocked state. When the first and the second displaceable lock members 31, 32 are fully retracted (as shown in figure 2b), the towing hook 11 is permitted to be displaced to the idle position using the first electrical motor 20, as described above.

The lock arrangement 30 can also be used to lock the towing hook 11 when positioned in the idle position. A third and a forth angled surface 43, 44 on the ball 16 of the second end 13 of the towing hook is configured to cooperate with the first and the second displaceable lock members 31, 32 in a similar manner as described above. Optionally when the towing hook 11 is in the idle position, only one of the displaceable lock members can be made to cooperate with one surface of the ball 16 of the second end 13 of the towing hook 11.

The first and/or the second electrical motors 20, 33 can be used to measure the amount of external load applied to the towing hook 11. Such measurements are also referred to as nose load measurements. The electrical motors 20, 33 are operated on a standard 12V automobile battery, providing a substantially constant amount of voltage. The invention is however not limited to this power source but power could also be drawn from 24V systems, a power grid (providing approximately 110V, 220V, 380V or the like), or any other suitable power source available.

As the electrical motors are capable of transferring torque, directly by means of the first electrical motor 20, or indirectly by means of the second electrical motor 33, to the towing hook 11, the transferred torque can be monitored, adjusted or changed. Using the electronic control unit ECU, the amount of power supplied to each of the first and/or the second electrical motors 20, 33 can be supervised, and thereby the amount of load, or torque, imparted to the towing hook. This enables a quantitative detection of the load applied to the towing hook 11 by the mounted object or the object to be towed. Hence, the amount of external load applied to the towing hook 11 can be estimated by means of an electrical motor and by tracking the amount of power fed to the electrical motor.

In an embodiment, the power required to perform a defined operation by the electrical motor can be measured and correlated to the amount of external load applied to the towing hook 11. In the embodiment described herein, both the first and/or the second electrical motor 20, 33 can be used, as will be described in greater detail below. It is however possible that only one of the electrical motors is used.

In the shown embodiment, the second electrical motor 33 is used to estimate the external load applied to the towing hook 11. In this embodiment, the lock arrangement 30 is used to displace the towing hook 11, from an unlocked state, figure 2b, to a locked state, figure 2a. Optionally, the lock arrangement 30 can be displaced from a partly unlocked state, figure 2c, to the locked state, figure 2a, which can be favorable as such operation can be performed with an external load continuously applied to the towing hook 11. The amount of power required to drive the second electrical motor 33 is measured, in the described embodiment, the current is measured. If no external load is applied to the towing hook 11, a zero load current can be defined. The zero load current is the current required to lock the towing hook 11 in the operative position when no object is connected to the towing hook 11, i.e. no external load is applied to the towing hook.

The second electrical motor 33 is herein described together with a first electrical motor, thus forming a fully electrical towing hook system. It is however possible that a manually operated towing hook, which can be displaced between an operative position and an idle position manually, can use a lock arrangement as described herein and the electrical motor operating the lock arrangement.

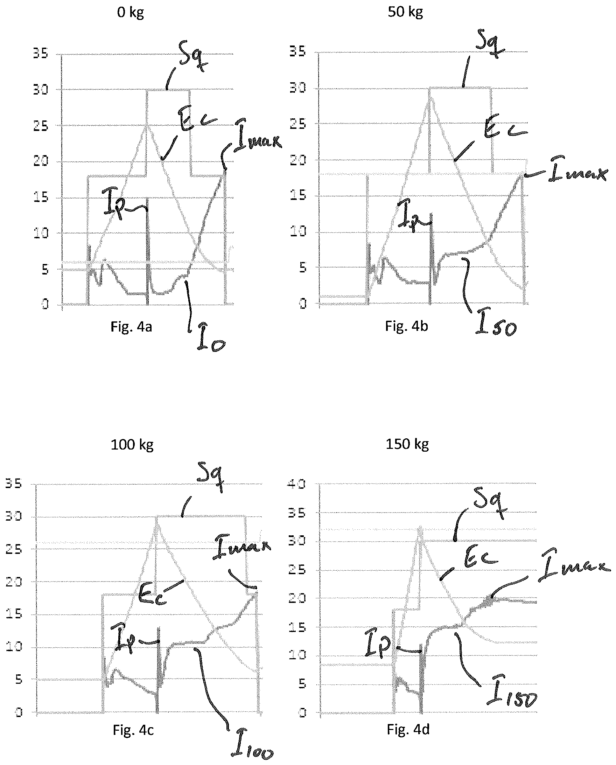

Figures 4a-4d show graphs of the measured current applied to the second electrical motor 33 during the displacement of the first and the second displaceable lock members 31, 32 towards each other, starting position as shown in figure 2b and end position as shown in figure 2a. The Y-axis is current measured in ampere (amp) and the X-axis is time units. On the actuator, i.e. the electrical motor in this case, driving the first and the second displaceable lock members 31, 32, is an encoder or ECU, indicating in what region of the cycle the system is, i.e. the position of the first and the second displaceable lock members 31, 32. For example, it the electrical motor requires the driving shaft 34 to be rotated 100 revolutions between the unlocked state and the locked state, the predetermined encoder count could be between 60-90 revolutions for example, optionally, the predetermined encoder counts can be within a determined time interval. For example, the electrical motor requires the driving shaft 34 to be rotated during 4 seconds for it to go from the unlocked state, or partly unlocked state, to the locked state, the predetermined encoder counts can be between 2-3 seconds for example. A pure visual identification can be performed as an option. As soon as the measurement region is identified for a system, the encoder is of less importance for carrying out the embodiment of the invention.

The measurement is thus taken in the shown embodiment at predetermined encoder counts. What is notable is that the required current to drive the electrical motor 33 is peaking just after the measurement region, as can be seen in figures 4a-4d. At this section, the first and the second displaceable lock members 31, 32 have substantially reached the locked state, and cannot be moved any further. This fact can also be used to establish the appropriate measurement region.

In figure 4a, the measured current is plotted and the relevant part used to define the zero load current is indicated with I₀, and is about 4 amp. Figure 4b shows a similar measurement but with an external load applied to the towing hook of 50 kg. The measured current I₅₀ is about 8 amp. Figure 4c shows a similar measurement but with an external load of 100 kg. The measured current I₁₀₀ is about 11 amp. Figure 4d shows a similar measurement but with an external load of 150 kg. The measured current I₁₅₀ is about 15 amp. The square contours, indicated Sq in figures 4a-4d are indicating a maximum current, set by software to prevent hazardous situations and overcurrents. The triangular shaped peaking lines are the encoder counts of the electrical motor 33, indicated with Ec in figures 4a-4d. Substantially in the middle of each figure and along the current graph is a current peak, indicated Ip, this peak is the transition between unlocking (to the left of the current peak Ip), and locking (to the right of the current peak Ip). Encoder counts run up when unlocking and down again when locking. The region of the predetermined encoder counts, and the amount of measured current, are indicated with I₀, I₅₀, I₁₀₀, I₁₅₀ in figures 4a-4d and summarized in table 1 below.

**Table 1.**

| Reference | Load / kg | Current / amp |
|---|---|---|
| I₀ | 0 | 4 |
| I₅₀ | 50 | 8 |
| I₁₀₀ | 100 | 11 |
| I₁₅₀ | 150 | 15 |
| Iₘₐₓ | Permanent stop | 18 |

In table 1 it can further be noted that the relationship between the measured current and the applied load is substantially linear. As is further noticed in figures 4a-4d, the current reaches a maximum at about Iₘₐₓ= 18 amp. The second electrical motor 33 drives the first and the second displaceable lock members 31, 32 to the operative position, shown in figures 1a-1b, until the wedge section 26 of the housing 18 prevents the towing hook 11 from being displaced any further; providing a permanent stop. When the current reaches 18 amp, the electronic control unit ECU stops the drive of the second electrical motor 33 as it recognizes that the towing hook 11 is in the operative position and sufficiently wedged into the wedge section 26 of the housing 18. In accordance with an embodiment, the electrical motor is subjected with a current of 1-50 amp, preferably 2-20 amp, more preferably 4-18 amp, to measure the external load applied to the towing hook 11.

The external load applied to the towing hook 11 can thus be measured by supervising the continuously increasing amount of current fed to the electrical motor, or the characteristics of the current, as shown in figures 4a-4d (i.e. to the right of the current peak Ip).

It is also possible to measure the external load applied to the towing hook 11 by supervising the continuously decreasing amount of current fed to the electrical motor, or the characteristics of the current, as shown in figures 4a-4d (i.e. to the left of the current peak Ip).

Turning back to figure 1a, in a second embodiment, an electrical control unit operates the first electrical motor 20, i.e. the first electrical motor is used to estimate the applied load to the towing hook 11. As mentioned, the first electrical motor 20 is used to displace the towing hook 11 between the operative position and the idle position by rotation of the driving shaft 21. If no load is applied to the towing hook 11, the electrical motor 20 will require a defined amount of current to put the towing hook 11 into position, i.e. to displace the towing hook 11 to the operative position as shown in figure 1a. The current required will be deemed as a zero load current, I₀. The load applied to the towing hook 11 will be exerted by a trailer, in this case a Thule boat trailer model Thule 10018B, for leisure boats up to 730 kg.

The towing hook 11 is raised form an idle position, behind the bumper of the vehicle, to a position in which the trailer can be hung on the towing hook 11. At this stage and position, it would be unacceptable to tow the trailer, as the towing hook 11 is not in the operative position. The towing hook 11 is thereafter displaced to substantially the operative position, permitting towing, and the required current needed for the displacement is measured and used to determine, or estimate, the load exerted by the trailer to the towing hook 11. A more precise measurement is achieved if the current, just as described with reference to figures 4a-4b, is plotted. The characteristics of the supplied power can further be analyzed in this manner.

Alternatively, the towing hook 11 is raised from an idle position to an operative position in which the towing hook 11 is locked. The towing hook arrangement 10 is now safe to use. If a user requests a nose load measurement, the towing hook 11 is displaced to a partly unlocked position and thereafter back to the locked position, during which movement the current needed for the displacement is measured and used to determine, or estimate, the load exerted by the trailer to the towing hook 11.

In a third embodiment, both the first and the second electrical motors 20, 33 are used to determine the amount of load applied to the towing hook 11. The current measurements from the first and the second electrical motor 20, 33 can be used together to decide the amount of load applied to the towing hook 11, or, optionally, readings from one electrical motor can be used to confirm the readings from the other electrical motor.

The towing hook 11 of the towing hook arrangement 10 described above can be displaced between an operative position and an idle position. It should be understood however that the towing hook arrangement 10 can have a towing hook which is not capable of being displaced between an operative position and an idle position, i.e. a substantially fixed towing hook. For example, the principle described in relation with the second electrical motor could be used to detect the applied load to a towing hook which cannot be displaced to an idle position, i.e. which always is positioned in an operative position. Such a towing hook can be displaced, or pivoted, a small distance but still be operative. As such, the detection of the applied load to the towing hook can be done as a vehicle is actually towing the object, or an object is mounted to the towing hook. It is also possible that the towing hook is not displaced at all during the measurement of external load applied to the towing hook.

It is further possible to measure the absence of a load, or even if a negative load, imparted to the towing hook 11 in the above mentioned manner. If the measured current is less than the zero load current, it is possible that the load applied to the towing hook is "negative". For example; if a one axle trailer is attached to the towing hook, and load such as gravel, is incorrectly loaded onto the trailer, the trailer can pivot about the axle away from the towing hook, imparting a lifting force to the towing hook and thus exert a "negative" load.

A trailer presence per se can further be detected. This could be important when using electrically operated towing hooks which automatically moves between an operative position and an idle position to prevent users, or any other third person, from injuries derived from accidental displacement of the towing hook.

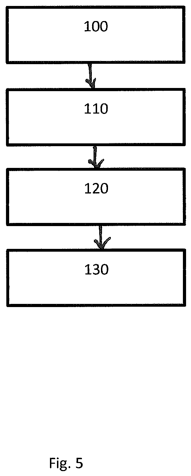

A method for measuring the external load applied to a towing hook, such as the towing hook 11, will be described with reference to figure 5. Figure 5 shows; 100 a current is applied to the electrical motor. 110 the level of the applied current is detected. The detection can be performed by recording, tracking or measuring the fed current, directly or indirectly, to the electrical motor e.g. continuously, or by subjecting the electrical motor to a pre-set current schedule. An example of a pre-set current schedule could be to feed the electrical motor with a specified current for a selected time interval. 2 amp for 1 sec, 4 amp, for 1 sec, 6 amp for 1 sec, 8 amp for 1 sec, optionally 10 amp for 1 sec, 12 amp for 1 sec, etc. Preferred is however to feed the electrical motor with a constant voltage and just to track the current. 120; determining the load applied to the electrically operable towing hook using the level of applied current and/or the characteristics of the applied current. An optional step 130 can be to perform an action as a result of the measured outcome of the previous step. Such action could be to warn a user e.g. via any type of warning signal such as via sound- and/or light based warning signal.

Step 100 can optionally include applying an external load to the towing hook before the current is applied to the electrical motor. Such external load could be a load exerted by an object, such as a trailer, caravan, bike carrier or the like. Optionally the external load could be a load applied to the trailer, bike carrier or caravan itself. The applied load could also be a calibration load used to calibrate the load measurement for example.

Step 110 can optionally include detecting the level of applied current directly by measuring the current required to operate the electrical motor for example, or indirectly by measuring a parameter indicative of the current fed to the electrical motor, or the amount of torque applied to the towing hook.

Step 120 can optionally include determining the external load applied to the manually or electrically operable towing hook using the detected level of applied current.

The towing hook 11 described above can be displaced between an operative position and an idle position, it should be understood however that the method can also be applied to towing hooks which are not capable of being displaced between an operative position and an idle position. For example, the principle described in relation with the second electrical motor could be used to detect the applied load to a towing hook which cannot be displaced to an idle position, i.e. which always is positioned in an operative position, and/or displaceable between an operative position and a measurement position. Such towing hooks could be displaced a small distance and still be operative. As such, in one embodiment, the detection of the applied load to the towing hook can be done as a vehicle is towing the object.

In the above described embodiments, the initially applied current is low, e.g. 2 amp and thereafter it has been subsequently increased, to determine said amount of load applied to the towing hook 11. It is also possible however to initially apply a high amount of current, e.g. 18 amp, and thereafter subsequently decrease the amount of current. When it is noticed that the towing hook 11 is displaced due to the load applied to the towing hook 11 and that the electrical motor no longer sustains the position of the towing hook 11, the amount of applied current at that point can be correlated to the amount of external load applied to the towing hook. Combinations of these two steps are also possible, forming current cycles. For example; the current can initially be high, e.g. 18 amp, and thereafter decreased, e.g. to 4 amp, and thereafter increased, e.g. back to 18 amp. It is possible to perform a selected number of current cycles to gain more accurate measurements of the applied load to the towing hook. In an embodiment, 2, 3, 4, 5 or more selected cycles are performed.

## Claims

1. A towing hook arrangement (10) for a vehicle (1), said towing hook arrangement (10) comprising a towing hook (11), an electrical motor (20, 33), said electrical motor (20, 33) being adapted to interact with said towing hook (11),
said towing hook arrangement (10) being adapted to, at least temporary, determine the amount of power supplied to said electrical motor (20, 33),
**characterised in that**
said towing hook arrangement further comprises an electronic control unit (ECU) configured to supervise said amount of power supplied to said electrical motor (20, 33) in order to determine the amount of external load applied to said towing hook (11).

2. The towing hook arrangement according to claim 1, wherein said electrical motor (20, 33) is adapted to impart a load to said towing hook (11).

3. The towing hook arrangement according to any one of the preceding claims, wherein said towing hook (11) comprises a lock arrangement (30) for preventing said towing hook (11) from being displaced.

4. The towing hook arrangement according to claim 3, wherein said lock arrangement (30) comprises at least one displaceable lock member (31, 32) and in that said electrical motor (33) is adapted to displace said at least one displaceable lock member (31, 32).

5. The towing hook arrangement according to claim 3 or 4, wherein said electrical motor (33) is adapted to operate said at least one displaceable lock member (31, 32) via a rotatable shaft (34).

6. The towing hook arrangement according to any one of the preceding claims, wherein said determination of said external load is to determine if said towing hook (11) is loaded, or not loaded, with an external load.

7. The towing hook arrangement according to any one of the preceding claims, wherein said electrical motor (20, 33) is configured for displacing said towing hook (11) between an operative position and an idle position, and/or for operating a lock arrangement (30).

8. The towing hook arrangement according to any of the preceding claims, wherein said towing hook arrangement (10) comprises at least a second electrical motor, one of said electrical motors (20) being adapted to displace said towing hook between a first and a second position, and one of said electrical motors (33) is adapted to operate a lock arrangement (30) to said towing hook (11).

9. The towing hook arrangement according to any one of the preceding claims, wherein said electronic control unit is adapted to measure a current supplied to said electrical motor (20, 33).

10. A method for measuring an external load applied to a towing hook (11) in a towing hook arrangement (10), the towing hook arrangement (10) comprising an electrical motor (20, 33) being adapted to interact with said towing hook (11), and an electronic control unit (ECU), said method comprising the steps of;
a) measuring the amount of power supplied to said electrical motor (20, 33), wherein said ECU is used to supervise the amount of power supplied to said electrical motor (20, 33),
b) using said measured amount of power to determine the amount of external load applied to said towing hook (11).

11. The method according to claim 10, wherein said electrical motor (20, 33) is imparting a load to said towing hook (11) to enable the measuring of said external load applied to said towing hook (11).

12. The method according to claim 10 or 11, wherein said method further comprises the step of; displacing said towing hook (11) a first distance, and detecting the amount of applied power during, or in connection with, said displacement.

13. The method according to any one of the claims 10-12, wherein said method further comprises the step of; determining if said towing hook (11) is loaded, or not loaded, with an external load.

14. The method according to any one of the claims 10-13, wherein said electrical motor (33) is configured to operate a lock arrangement (30), and/or said electrical motor (20) is configured to operate displacement of said towing hook (11) between an operative position and an idle position.

15. The method according to any one of the claims 10-14, wherein said method further comprises the step of; unlocking said towing hook (11) from a locked state, in which said towing hook (11) is prevented from being displaced, to a partly unlocked state, or to an unlocked state, in which said towing hook (11) is permitted to be displaced.

16. The method according to any one of the claims 10-15, wherein said towing hook (11) can be positioned in an operative position and an idle position.

17. The method according to any one of claims 10-16, wherein said method further comprises:
feeding said electrical motor (20, 33) with a constant voltage and tracking a current to said electrical motor (20, 33) for measuring the amount of power supplied to said electrical motor (20, 33).

## Patentansprüche

1. Anhängerkupplungsanordnung (10) für ein Fahrzeug (1), wobei die Anhängerkupplungsanordnung (10) eine Anhängerkupplung (11), einen Elektromotor (20, 33) umfasst, wobei der Elektromotor (20, 33) so angepasst ist, dass er mit der Anhängerkupplung (11) zusammenwirkt,
wobei die Anhängerkupplungsanordnung (10) angepasst ist, um zumindest vorübergehend die dem Elektromotor (20, 33) zugeführte Energiemenge zu bestimmen,
**dadurch gekennzeichnet, dass**
die Anhängerkupplungsanordnung weiter eine elektronische Steuereinheit (ECU) umfasst, die konfiguriert ist, um die dem Elektromotor (20, 33) zugeführte Energiemenge zu überwachen, um die Größe der an der Anhängerkupplung (11) angelegten externen Last zu bestimmen.

2. Anhängerkupplungsanordnung nach Anspruch 1, wobei der Elektromotor (20, 33) angepasst ist, um eine Last auf die Anhängerkupplung (11) zu übertragen.

3. Anhängerkupplungsanordnung nach einem der vorstehenden Ansprüche, wobei die Anhängerkupplung (11) eine Verriegelungsanordnung (30) umfasst, um zu verhindern, dass die Anhängerkupplung (11) verstellt wird.

4. Anhängerkupplungsanordnung nach Anspruch 3, wobei die Verriegelungsanordnung (30) mindestens ein verstellbares Verriegelungselement (31, 32) umfasst und wobei der Elektromotor (33) angepasst ist, um das mindestens eine verstellbare Verriegelungselement (31, 32) zu verstellen.

5. Anhängerkupplungsanordnung nach Anspruch 3 oder 4, wobei der Elektromotor (33) angepasst ist, um das mindestens eine verstellbare Verriegelungselement (31, 32) über eine drehbare Welle (34) zu betreiben.

6. Anhängerkupplungsanordnung nach einem der vorstehenden Ansprüche, wobei die Bestimmung der externen Last dazu dient, zu bestimmen, ob die Anhängerkupplung (11) mit einer externen Last belastet oder nicht belastet wird.

7. Anhängerkupplungsanordnung nach einem der vorstehenden Ansprüche, wobei der Elektromotor (20, 33) konfiguriert ist, um die Anhängerkupplung (11) zwischen einer Betriebsstellung und einer Ruhestellung zu verstellen und/oder eine Verriegelungsanordnung (30) zu betätigen.

8. Anhängerkupplungsanordnung nach einem der vorstehenden Ansprüche, wobei die Anhängerkupplungsanordnung (10) mindestens einen zweiten Elektromotor umfasst, wobei einer der Elektromotoren (20) angepasst ist, um die Anhängerkupplung zwischen einer ersten und einer zweiten Stellung zu verstellen, und einer der Elektromotoren (33) angepasst ist, um eine Verriegelungsanordnung (30) an der Anhängerkupplung (11) zu betreiben.

9. Anhängerkupplungsanordnung nach einem der vorstehenden Ansprüche, wobei die elektronische Steuereinheit angepasst ist, um einen Strom zu messen, der dem Elektromotor (20, 33) zugeführt wird.

10. Verfahren zum Messen einer externen Last, die an eine Anhängerkupplung (11) in einer Anhängerkupplungsanordnung (10) angelegt wird, wobei die Anhängerkupplungsanordnung (10) einen Elektromotor (20, 33) umfasst, der so ausgelegt ist, dass er mit der Anhängerkupplung (11) zusammenwirkt, und eine elektronische Steuereinheit (ECU), wobei das Verfahren die folgenden Schritte umfasst;
a) Messen der dem Elektromotor (20, 33) zugeführten Energiemenge, wobei die ECU verwendet wird, um die dem Elektromotor (20, 33) zugeführte Energiemenge zu überwachen,
b) Verwenden der gemessenen Energiemenge, um die Größe der an der Anhängerkupplung (11) angelegten externen Last zu bestimmen.

11. Verfahren nach Anspruch 10, wobei der Elektromotor (20, 33) eine Last an die Anhängerkupplung (11) überträgt, um das Messen der an der Anhängerkupplung (11) angelegten externen Last zu ermöglichen.

12. Verfahren nach Anspruch 10 oder 11, wobei das Verfahren weiter den folgenden Schritt umfasst: Verstellen der Anhängerkupplung (11) um einen ersten Abstand und Erfassen der Größe der angelegten Leistung während oder in Verbindung mit der Verstellung.

13. Verfahren nach einem der Ansprüche 10-12, wobei das Verfahren weiter den folgenden Schritt umfasst: Bestimmen, ob die Anhängerkupplung (11) mit einer externen Last belastet oder nicht belastet ist.

14. Verfahren nach einem der Ansprüche 10-13, wobei der Elektromotor (33) konfiguriert ist, um eine Verriegelungsanordnung (30) zu betreiben, und/oder der Elektromotor (20) konfiguriert ist, um die Verstellung der Anhängerkupplung (11) zwischen einer Betriebsstellung und einer Ruhestellung zu betreiben.

15. Verfahren nach einem der Ansprüche 10-14, wobei das Verfahren weiter den folgenden Schritt umfasst: Entriegeln der Anhängerkupplung (11) aus einem verriegelten Zustand, in dem verhindert wird, dass die Anhängerkupplung (11) in einen teilweise entriegelten Zustand oder in einen entriegelten Zustand verstellt wird, in dem die Anhängerkupplung (11) verstellt werden kann.

16. Verfahren nach einem der Ansprüche 10-15, wobei die Anhängerkupplung (11) in einer Betriebsstellung und einer Ruhestellung positioniert werden kann.

17. Verfahren nach einem der Ansprüche 10-16, wobei das Verfahren weiter umfasst:
Speisen des Elektromotors (20, 33) mit einer konstanten Spannung und Verfolgen eines Stroms zu dem Elektromotor (20, 33) zum Messen der dem Elektromotor (20, 33) zugeführten Energiemenge.

## Revendications

1. Agencement de crochet de remorquage (10) pour un véhicule (1), ledit agencement de crochet de remorquage (10) comprenant un crochet de remorquage (11), un moteur électrique (20, 33), ledit moteur électrique (20, 33) étant adapté pour interagir avec ledit crochet de remorquage (11),
ledit agencement de crochet de remorquage (10) étant adapté pour, au moins temporairement, déterminer la quantité d'énergie fournie audit moteur électrique (20, 33),
**caractérisé en ce que**
ledit agencement de crochet de remorquage comprend en outre une unité de commande électronique (ECU) configurée pour surveiller ladite quantité d'énergie fournie audit moteur électrique (20, 33) afin de déterminer la quantité de charge externe appliquée audit crochet de remorquage (11).

2. Agencement de crochet de remorquage selon la revendication 1, dans lequel ledit moteur électrique (20, 33) est adapté pour transmettre une charge audit crochet de remorquage (11).

3. Agencement de crochet de remorquage selon l'une quelconque des revendications précédentes, dans lequel ledit crochet de remorquage (11) comprend un agencement de verrouillage (30) pour empêcher ledit crochet de remorquage (11) d'être déplacé.

4. Agencement de crochet de remorquage selon la revendication 3, dans lequel ledit agencement de verrouillage (30) comprend au moins un élément de verrouillage déplaçable (31, 32) et en ce que ledit moteur électrique (33) est adapté pour déplacer ledit au moins un élément de verrouillage déplaçable (31, 32).

5. Agencement de crochet de remorquage selon la revendication 3 ou 4, dans lequel ledit moteur électrique (33) est adapté pour faire fonctionner ledit au moins un élément de verrouillage déplaçable (31, 32) par l'intermédiaire d'un arbre rotatif (34).

6. Agencement de crochet de remorquage selon l'une quelconque des revendications précédentes, dans lequel ladite détermination de ladite charge externe est pour déterminer si ledit crochet de remorquage (11) est chargé, ou non chargé, avec une charge externe.

7. Agencement de crochet de remorquage selon l'une quelconque des revendications précédentes, dans lequel ledit moteur électrique (20, 33) est configuré pour déplacer ledit crochet de remorquage (11) entre une position de fonctionnement et une position à d'arrêt, et/ou pour faire fonctionner un agencement de verrouillage (30).

8. Agencement de crochet de remorquage selon l'une quelconque des revendications précédentes, dans lequel ledit agencement de crochet de remorquage (10) comprend au moins un deuxième moteur électrique, un desdits moteurs électriques (20) étant adapté pour déplacer ledit crochet de remorquage entre une première et une deuxième position, et un desdits moteurs électriques (33) est adapté pour faire fonctionner un agencement de verrouillage (30) sur ledit crochet de remorquage (11).

9. Agencement de crochet de remorquage selon l'une quelconque des revendications précédentes, dans lequel ladite unité de commande électronique est adaptée pour mesurer un courant fourni audit moteur électrique (20, 33).

10. Procédé pour mesurer une charge externe appliquée à un crochet de remorquage (11) dans un agencement de crochet de remorquage (10), l'agencement de crochet de remorquage (10) comprenant un moteur électrique (20, 33) étant adapté pour interagir avec ledit crochet de remorquage (11), et une unité de commande électronique (ECU), ledit procédé comprenant les étapes consistant à :
a) mesurer la quantité d'énergie fournie audit moteur électrique (20, 33), dans lequel ladite ECU est utilisée pour surveiller la quantité d'énergie fournie audit moteur électrique (20, 33),
b) utiliser ladite quantité d'énergie mesurée pour déterminer la quantité de charge externe appliquée audit crochet de remorquage (11).

11. Procédé selon la revendication 10, dans lequel ledit moteur électrique (20, 33) transmet une charge audit crochet de remorquage (11) pour permettre la mesure de ladite charge externe appliquée audit crochet de remorquage (11).

12. Procédé selon la revendication 10 ou 11, dans lequel ledit procédé comprend en outre l'étape consistant à : déplacer ledit crochet de remorquage (11) d'une première distance, et détecter la quantité d'énergie appliquée durant, ou en rapport avec, ledit déplacement.

13. Procédé selon l'une quelconque des revendications 10 à 12, dans lequel ledit procédé comprend en outre l'étape consistant à : déterminer si ledit crochet de remorquage (11) est chargé, ou non chargé, avec une charge externe.

14. Procédé selon l'une quelconque des revendications 10 à 13, dans lequel ledit moteur électrique (33) est configuré pour faire fonctionner un agencement de verrouillage (30), et/ou ledit moteur électrique (20) est configuré pour effectuer un déplacement dudit crochet de remorquage (11) entre une position de fonctionnement et une position d'arrêt.

15. Procédé selon l'une quelconque des revendications 10 à 14, dans lequel ledit procédé comprend en outre l'étape consistant à : déverrouiller ledit crochet de remorquage (11) depuis un état verrouillé, dans lequel ledit crochet de remorquage (11) est empêché d'être déplacé, vers un état partiellement déverrouillé, ou vers un état déverrouillé, dans lequel ledit crochet de remorquage (11) est autorisé à être déplacé.

16. Procédé selon l'une quelconque des revendications 10 à 15, dans lequel ledit crochet de remorquage (11) peut être positionné dans une position de fonctionnement et dans une position d'arrêt.

17. Procédé selon l'une quelconque des revendications 10 à 16, dans lequel ledit procédé comprend en outre :
l'alimentation dudit moteur électrique (20, 33) avec une tension constante et le suivi d'un courant audit moteur électrique (20, 33) pour mesurer la quantité d'énergie fournie audit moteur électrique (20, 33).
